# EUROPÄISCHE PATENTSCHRIFT

(11) **EP 3 431 442 B1**
(45) Veröffentlichungstag und Bekanntmachung des Hinweises auf die Patenterteilung: **19.01.2022**
(21) Anmeldenummer: 18184591.8
(22) Anmeldetag: 20.07.2018
(51) Int. Cl.: C01D 7/00, C01D 7/07, C09K 3/18, C02F 1/58, B01D 53/62

(54) **VERFAHREN ZUR HERSTELLUNG VON KALIUMKARBONAT**
METHOD FOR MANUFACTURING POTASSIUM CARBONATE
PROCÉDÉ DE FABRICATION DE CARBONATE DE POTASSIUM

(30) Priorität: 20.07.2017 EP 17182333
(43) Veröffentlichungstag der Anmeldung: 23.01.2019
(73) Patentinhaber: Lengheim, Hubert, 2213 Bockfliess (AT)
(72) Erfinder: Lengheim, Hubert, 2213 Bockfliess (AT)
(74) Vertreter: SONN Patentanwälte OG

(56) Entgegenhaltungen:
- WO-A2-2004/063154
- CN-U- 203 976 418
- US-A- 1 467 330
- US-A- 3 819 813
- US-A- 5 449 506
- US-A1- 2014 010 743
- Martina Kainz ET AL: "Heißes Thema: Eis und Schnee", , November 2003 (2003-11), XP055441197, Gefunden im Internet: URL:http://www.die-gruenen-moedling.at/fil eadmin/media/umwelt/luft_und_wasser/Heisse s_Thema_Eis_und_Schneer.pdf [gefunden am 2018-01-16]

## Beschreibung

Die vorliegende Erfindung betrifft ein Verfahren zur Herstellung von Kaliumkarbonat (K₂CO₃).

Kaliumkarbonat oder Pottasche wurde ursprünglich durch Verbrennen von Holz, hauptsächlich von Buche und Eiche, gewonnen. Dabei wurden die salzhaltige Asche in Wasser gelöst und die löslichen Salze in mehreren Arbeitsgängen durch Auslaugung getrennt. Die Lauge wurde schließlich in eisernen Pötten eingedampft und die Rückstände zu Pottasche gebrannt. Moderne Methoden verwenden Kalilauge oder Kalkmilch und Kaliumsulfat als Grundbaustein um unter Einwirkung von Kohlenstoffdioxid Kaliumkarbonat herzustellen.

Ein alternatives Verfahren zur Herstellung von Kaliumkarbonat ist beispielsweise in der EP 1 741 673 A beschrieben, wonach aus biogener Asche von beispielsweise Holzhackgut, Baumrinde oder Sägespänen durch Karbonatisierung mit Kohlendioxid-hältiger Abluft Kaliumkarbonat gewonnen wird.

Die US 2014/010743 A1 offenbart ein Verfahren zum Aufbereiten von sulfathaltigen Abwässern, wie zum Beispiel industriell anfallendem sulfathaltigen Abwasser und sulfathaltigen Abwasser aus der Herstellung von Öl und Kohlenwasserstoffgas, mittels Elektrolyse. Dabei wird aus dem sulfathaltigen Abwasser eine Lösung enthaltend Alkalihydroxid gewonnen, anschließend wird die Alkalihydroxidlösung mit einem Gas enthaltend Kohlendioxid in Kontakt gebracht, um eine Alkalicarbonatlösung herzustellen.

Die CN 203 976 418 U offenbart die Verwendung von Erdgas als Rohmaterial zur Herstellung von Kaliumchlorid und Kaliumhydroxid, Kaliumcarbonat, PVC, Harnstoff und Methanol.

Der Großteil des weltweit produzierten Kaliumkarbonats findet Verwendung in der Düngemittel-, Glas-, und Lebensmittelindustrie, bei der Seifen- und Emailherstellung und als Ausgangsprodukt für andere Kaliumverbindungen, wie zum Beispiel Kaliumhydrogenkarbonat. Die Herstellung von Kaliumcarbonatgranulat aus einer wässrigen Kaliumcarbonatlösung wird in der US 5 449 506 A beschrieben.

Kaliumkarbonat ist weiters auch als ökologisch alternatives Auftau- und Gefrierschutzmittel bekannt ("die Umweltberatung", Heißes Thema: Eis und Schnee; Verband Österreichischer Umweltberatungsstellen, Wien, Fachbereich Wasser, November 2003). Die Verwendung einer wässrigen Kaliumkarbonatlösung als flüssiges Auftaumittel wird in der WO 2004/063154 A2 beschrieben. Das häufigste verwendete Streumittel ist jedoch aus Kostengründen nach wie vor Natriumchlorid, mitunter werden auch Calciumchlorid, Magnesiumchlorid und deren Mischungen mit Natriumchlorid verwendet.

Grundsätzlich werden Auftaumittel als Trocken- oder Feuchtsalz auf die Straßen aufgebracht. Unter Feuchtsalz versteht man trockenes Auftausalz, welches kurz vor dem Aufbringen mit einer Lösung angefeuchtet wird. Im Gegensatz zu Trockensalz haftet Feuchtsalz besser auf der Straße und weist eine höhere Tauwirksamkeit auf. Die Verwendung von Chlorid-haltigen Auftausalzen hat jedoch negative Auswirkungen auf Bäume und Pflanzen, da die Chloride die Wasseraufnahme in den Wurzeln beeinträchtigt. Dies führt zu Nährstoffmangelerscheinungen und Verätzungen von Pflanzenteilen bis hin zum Absterben der betroffenen Pflanzen bzw. Bäumen.

Da Kalium für die Regulierung des Wasserhaushalts in Pflanzen verantwortlich ist, führen hohe Kaliumkonzentrationen in der Pflanze sowohl zur Festigung der Zellwände und somit zur Verbesserung der Frostresistenz als auch zu einer erhöhten Resistenz gegenüber Krankheiten. Um ökologische Folgeschäden zu vermeiden und auch ein verbessertes Wachstum von Pflanzen und Bäumen auf Nebenstraßen zu gewährleisten, wird daher die Verwendung von Kaliumkarbonat als Auftau- und Gefrierschutzmittel bevorzugt.

Kalium kommt in der Natur in zahlreichen Mineralien vor und ist ein Hauptnährelement der Pflanzen, da es ihr Wachstum fördert.

Ablagerungen von Salzmineralien mit hohem Gehalt an Kaliumverbindungen werden als Kalisalze bezeichnet. Bis heute werden die natürlichen Kalivorkommen weltweit überwiegend in fester Form im konventionellen Bergbau unter Tage gewonnen. Seit über 100 Jahren wird beispielsweise im Werragebiet an der hessisch-thüringischen Grenze Bergbau betrieben, um Kalidünger für den Einsatz in der Landwirtschaft zu gewinnen. Der Anteil an Wertstoffen im gewonnenen Rohsalz beträgt jedoch lediglich maximal 30 Prozent, die restlichen 2/3 der Fördermenge (ca. 20 Mio. t pro Jahr), entweder in fester oder flüssiger Form, werden als Abfälle entsorgt. Feste Rückstände aus der Kaliproduktion werden zum Großteil aufgehaldet oder durch Versatz entsorgt. Die Entsorgung der ebenfalls anfallenden Salzabwässer, beispielsweise der Haldenabwässer, erfolgt hingegen durch Einleitung z.B. in die Werra oder durch Versenkung in den Untergrund. Die Entsorgungswege der beim Kalibergbau entstehenden Salzabwässer sind bereits seit längerem umstrittene Methoden, da sich das versenkte Abwasser unkontrolliert ausbreitet und auf Grund des hohen Mineralgehalts eine Gefahr für das Grundwasser darstellt. Die Entsorgung des Salzabwassers stellt also nicht nur ein wirtschaftliches Problem dar, sondern auch ein enorm umweltrelevantes. Alternative Wege der Kalilaugen-Entsorgung werden daher dringend benötigt um die derzeitige Umweltsituation zu verbessern.

Die Salzabwässer aus der Kaliproduktion setzen sich im Wesentlich aus Natrium, Kalium, Magnesium, Chlorid und Sulfat in gelöster Form zusammen. Die tatsächliche chemische Zusammensetzung der Salzabwässer hängt jedoch von verschiedenen Faktoren, wie z.B. der Rohstoffzusammensetzung bzw. der Qualität des Ausgangsmaterials, dem gewählten Aufbereitungsverfahren sowie dem herzustellenden Endprodukt und seiner erforderlichen Qualität ab. Die chemische Zusammensetzung der auch bei der Aufhaldung anfallenden Salzabwässer ist abhängig von der Zusammensetzung des aufgehaldeten Rückstands. Eine typische Zusammensetzung der aufgehaldeten Rückstände ist in Tabelle 1 gezeigt. In Tabelle 2 werden prognostizierte jährliche Volumina und mittlere Zusammensetzungen der Hauptkomponenten in verschiedenen Salzabwasserarten verschiedener Standorte der K+S Kali GmbH aufgezeigt.

**Tabelle 1: Typische Zusammensetzung von Kalihalden (Gew.%)**

| | |
|---|---|
| Steinsalz (NaCl) | 70-95 |
| Kieserit (MgSO₄xH₂O) | 0,5-30 |
| Anhydrit/Gips (CaSO₄) | 0,5-25 |
| Kalisalzreste (KCl) | 1-3 |
| Ton, unlösliche Bestandteile | 0,5-5 |

**Tabelle 2: Prognostizierte jährlich anfallende Volumina und mittlere Zusammensetzungen von Salzabwasserarten im Werk Werra; HA KDW, Hattorf Kieseritdeckwasser; HA E-Lsg. KKF, Hattdorf "E-Lösung" Kainit-Kristallisations-Flotations-Anlage; WI KDW, Wintershall Kieseritdeckwasser; WI Q-Lsg., Wintershall Q-Lösung aus dem Heißlöseprozess; WI E-Lsg., Wintershall "E-Lösung", HA HW, Hattorf Haldenwasser, WI HW, Wintershall Haldenwasser; NE HW, Neuhof-Ellers Haldenwasser(Ergänzungsfernleitung zur Entsorgung der Salzabwässer aus dem hessisch-thüringischen Kalirevier an die Oberweser, Antragsunterlagen zum Raumordnungsverfahren, Stand 20.11.2015).**

| Salzabwasserstrom | Volumen [m³] | KCl [g/l] | MgCl₂ [g/l] | MgSO₄ [g/l] | NaCl [g/l] | Cl-/Mg²⁺ [g/l] |
|---|---|---|---|---|---|---|
| HA KDW | 352000 | 57 | 38 | 50 | 164 | 7,8 |
| HA E-Lsg. KKF | 1400000 | 46 | 299 | 38 | 29 | 3,1 |
| WI KDW | 353000 | 59 | 35 | 85 | 200 | 6,7 |
| WI Q-Lsg. | 403000 | 88 | 145 | 68 | 103 | 4,2 |
| WI E-Lsg. | 536000 | 52 | 278 | 46 | 36 | 3,2 |
| HA HW | 858000 | 40 | 65 | 85 | 168 | 5 |
| WI HW | 881000 | 43 | 67 | 102 | 173 | 4,6 |
| NE HW | 770000 | 36 | 58 | 75 | 122 | 4,5 |

Ein weiteres industrielles Verfahren, bei welchem Kalilauge (eine wässrige Lösung von Kaliumhydroxid) und/oder Kalium-haltiges Abwasser anfällt, ist beispielsweise die Biodiesel-Produktion. Biodiesel wird durch Umesterung von pflanzlichen oder tierischen Fetten und Ölen mit einwertigen Alkoholen gewonnen. Starke Basen, darunter auch Kaliumhydroxid, werden bei der Umesterung von Triglyzeriden mit Methanol zu Methylester als Katalysatoren eingesetzt. Der Katalysator muss jedoch am Ende dieses Verfahrens wieder vom Endprodukt abgetrennt werden. Abhängig vom Biodiesel-Herstellungsverfahren erfolgt die Abtrennung des Katalysators entweder durch eine mehrstufige Wäsche mit Wasser in sogenannten Waschseparatoren, wobei ein Gemisch aus Wasser, Katalysator, Seife und geringen Mengen an Glycerin entsteht, oder durch Aufspaltung der Katalysator-haltigen Glycerinphase mit Säure, wodurch die Fettsäurephase weiter mit einem sauren Katalysator verestert wird und die restlichen Bestandteile, wie der basische Katalysator, als Feststoffe ausfallen.

Andererseits haben die derzeit verwendeten Herstellungsverfahren von Kaliumkarbonat zur Folge, dass Kaliumkarbonat um etwa das Vierfache teurer ist als Natriumchlorid. Aus diesem Grund wird trotz der besseren Umweltverträglichkeit des Kaliumkarbonats immer noch primär das Natriumchlorid als Auftau- und Gefrierschutzmittel eingesetzt. Das in der EP 1 741 673 A beschriebene Herstellungsverfahren von Kaliumkarbonat aus biogener Masse hat in diesem Zusammenhang den Nachteil, dass es langfristig zu großflächiger Abholzung führt.

Die Aufgabe der vorliegenden Erfindung besteht darin, ausgehend vom oben dargelegten Stand der Technik, ein wirtschaftlich und ökologisch verbessertes Verfahren zur Herstellung von Kaliumkarbonat (K₂CO₃) durch Wäsche von Kohlendioxid-haltigen Abgasen bereitzustellen, wobei das Kaliumkarbonat, welches in weiterer Folge vorzugsweise zur Verwendung als Auftau- und Gefrierschutzmittel eingesetzt werden kann, erfindungsgemäß aus einem beim Kalibergbau anfallenden Haldenabwassergewonnen wird.

Haldenabwasser ist ein industriell anfallendes Abwasser. Darunter werden im Rahmen der vorliegenden Erfindung alle jene Abwässer verstanden, die bei Produktions- und Verarbeitungsprozessen in der Industrie anfallen und, gegebenenfalls nach Konzentration, eine ausreichende Menge an Kaliumionen enthalten um Kohlendioxid unter Bildung von Kaliumcarbonat aus einem Kohlendioxid-haltigen Abgas zu waschen. Das Haldenabwasser ist derart zusammengesetzt, dass Kalium und Kaliumhydroxid in gelöster Form, gegebenenfalls nach Konzentration, in einer ausreichenden Menge enthalten sind, um Kohlendioxid unter Bildung von Kaliumcarbonat aus einem Kohlendioxid-haltigen Abgas zu waschen. Ferner enthält das Haldenabwasser Natrium, magnesium, Chlorid und Sulfat in gelöster Form. In einer besonders bevorzugten Ausführungsform des erfindungsgemäßen Verfahrens ist das industriell anfallende Abwasser Kaliumchlorid-haltiges Abwasser.

Das erfindungsgemäß verwendete Haldenabwasser kann gegebenenfalls konzentriert werden, Voraussetzung für den Einsatz im erfindungsgemäßen Verfahren ist jedenfalls, dass das Abwasser eine ausreichende Menge an Kaliumionen enthält um Kohlendioxid unter Bildung von Kaliumcarbonat aus einem Kohlendioxid-haltigen Abgas zu waschen. Vorzugsweise werden im erfindungsgemäßen Verfahren jene Haldenabwässer eingesetzt, welche im Vergleich zum Natriumchlorid-Gehalt einen relativ hohen Gehalt an Kaliumionen bzw. Kaliumchlorid aufweisen. Dies begünstigt eine gegebenenfalls gewünschte Abtrennung von Natriumchlorid vor Einsatz des Abwassers im erfindungsgemäßen Verfahren. Die Reinigung und/oder Auftrennung des Haldenabwassers erfolgt vorzugsweise durch dem Fachmann bekannte thermische Trennverfahren. Abhängig von der Zusammensetzung des Haldenabwassers können unterschiedliche Reinigungs- und/oder Trennverfahren notwendig sein. Endprodukte von Reinigungs- und/oder Trennverfahren von Haldenabwässern, welche gemäß dem erfindungsgemäßen Verfahrens Verwendung finden, sind Kaliumsalze in gelöster oder kristalliner Form. In der vorliegenden Erfindung ist das industriell anfallende Haldenabwasser Kaliumhydroxid-hältiges Haldenabwasser.

Ein solches Haldenabwasser entspricht in seiner Zusammensetzung weitestgehend der Zusammensetzung der aufgehaldeten Salze und deren Löslichkeit im Niederschlag. Als Beispiel sei wiederum auf das Grenzgebiet von Hessen und Thüringen entlang der Werra verwiesen, wo bereits seit mehr als 130 Jahren Düngesalze bergmännisch gewonnen und aufbereitet werden. Nicht benötigte Salze werden aufgehaldet, Salzlösungen wurden bislang als Abfall in die Werra entsorgt. Die Menge der in die Werra eingeleiteten hochkonzentrierten Salzabwässer beträgt dabei bis zu 10 Mio. m³/Jahr. Aufgrund der Niederschläge bildet sich auch Haldenab- bzw. Haldensickerwasser (bei der vorliegenden Erfindung werden diese beiden Wässer synonym als Haldenabwasser bezeichnet), 2015 beispielsweise fielen davon 700.000 m³ an. Naturgemäß schwankt Salzgehalt und -zusammensetzung des Haldenabwassers in Abhängigkeit von der auf Halde abgelagerten Restsalzen, der Menge an Niederschlag und der Löslichkeit der Salze in Wasser. Es hat sich jedoch bei der vorliegenden Erfindung gezeigt, dass alle aus dem Kalibergbau stammenden Haldenabwässer enthaltend gelöste Kalisalze bzw. Kaliumhydroxid hervorragende Ergebnisse lieferten und daher bevorzugt eingesetzt werden können.

In einem weiteren Aspekt ist das erfindungsgemäße Verfahren bevorzugt dadurch gekennzeichnet, dass das Kohlendioxid-haltige Abgas ein Verbrennungs- oder Abgas aus industriellen Großanlagen, wie fossilbefeuerte Kraftwerke, Hochöfen zur Produktion und Veredlung von Metallen, Erdgasaufbereitungsanlagen, Ammoniaksyntheseanlagen, Zementanlagen oder Kalkbrennereien, insbesondere aus Kalkbrennereien, ist.

Das erfindungsgemäße Verfahren ist bevorzugt durch die folgenden Schritte gekennzeichnet:
- Aufreinigen des gegebenenfalls konzentrierten beim Kalibergbau anfallenden Haldenabwassers, enthaltend Natrium, Kalium, Kaliumhydroxid Magnesium, Chlorid und Sulfat in gelöster Form. und
- Einsetzen des gegebenenfalls konzentrierten Haldenabwasser als Waschlösung bei der Gaswäsche.

In einer bevorzugten Ausführungsform des erfindungsgemäßen Verfahrens sind die beim Kalibergbau anfallenden Haldenabwässer vor der Konzentration bzw. Aufreinigung einer analytischen Qualitätskontrolle zu unterziehen, wobei unter anderem die Alkali-Bestandteile der Haldenabwässer, insbesondere der Kaliumgehalt, ermittelt wird.

Die in einer bevorzugten Ausführungsform durchgeführte Aufreinigung der beim Kalibergbau anfallenden Haldenabwässer erfolgt erfindungsgemäß abhängig von der bei der Qualitätskontrolle ermittelten Zusammensetzung. Bei Verunreinigung mit Ölen und Fetten werden die Haldenabwässer beispielsweise mit Demulgatoren zur Abtrennung der öligen Komponente behandelt.

In noch einer Ausführungsform der vorliegenden Erfindung werden die gelösten Alkalisalze aus dem beim Kalibergbau anfallenden Haldenabwasser getrennt. Die Trennung der Alkalisalze, insbesondere des Kaliumchlorids, aus den Haldenabwässern kann beispielsweise durch Flotation, dem Heißlöseverfahren, ESTA-Verfahren, durch Kalte Vor- und Nachzersetzung oder durch fraktionierte Kristallisation erfolgen. In einer bevorzugten Ausführungsform des erfindungsgemäßen Verfahrens erfolgt die Abtrennung von Kaliumchlorid aus dem beim Kalibergbau anfallenden Haldenabwasser durch fraktionierte Kristallisation.

Die fraktionierte Kristallisation zur Ausfällung von zwei oder mehr kristallisierbaren Substanzen ist ein aus dem Stand der Technik bekanntes Trennungsverfahren. Ein solches Verfahren ist zum Beispiel in der DE 10 2013 110 854 A1 beschrieben, worin ein Verfahren zur getrennten Abscheidung von Natriumchlorid (NaCl) und Kaliumchlorid (KCl) aus NaCl- und KCl-enthaltenden wässrigen Lösungen durch schrittweise Erwärmung und Abkühlung der Lösungen offenbart ist.

In der vorliegenden Erfindung enthält das beim Kalibergbau anfallende Haldenabwasser Kalium in Form von Kalilauge, sodass ein Trennungsverfahren der Alkalisalze und gegebenenfalls auch das Elektrolyseverfahren hinfällig sind. Vorzugsweise wird das Kaliumhydroxid-haltige Haldenabwasser vor dem Einsatz als Waschlösung bei der Abgaswäsche in einem Eindampfungsprozess aufkonzentriert. Nach einem besonders bevorzugten Merkmal der vorliegenden Erfindung wird das Kaliumhydroxid-haltige Haldenabwasser durch Eindampfung auf eine etwa mindestens 25%ige, 30%ige, 35%ige, 40%ige, 45%ige oder 50%ige Kalilauge aufkonzentriert. Auch zum Eindampfen kann die durch die nötige Abkühlung des Abgases vor seiner Wäsche gewonnene thermische Energie verwendet werden.

Gemäß dem erfindungsgemäßen Verfahren wird die aus dem beim Kalibergbau anfallenden Haldenabwasser gewonnene wässrige Lösung von Kaliumhydroxid in einem nächsten Schritt als Waschlösung bei der Abgaswäsche eingesetzt, wobei folgende Reaktion stattfindet:

2KOH + CO₂ → K₂CO₃ + H₂O

Kohlendioxid (CO₂) fällt bei zahlreichen Industrieprozessen als Verbrennung- bzw. Abgas an. Um die CO₂-Emission in die Atmosphäre zu verringern, ist die Abtrennung von CO₂ aus CO₂-haltigen industriellen Abgasen ein gängiges und teils auch gesetzlich vorgeschriebenes Verfahren.

In großtechnischem Maßstab erfolgt die Verbrennungs-, Rauch- bzw. Abgaswäsche mittels eines Absorptions-DesorptionsVerfahrens, wobei zuvor abgekühltes Rauch- bzw. Abgas in einem Absorber auf eine Waschlösung trifft, wodurch die Waschlösung durch das CO₂ des Gases gesättigt wird. Die CO₂-gesättigte Waschlösung wird dann durch einen Wärmetauscher geleitet und auf etwa 120°C erhitzt, wodurch das CO₂ wiederum in einem Desorber aus der Waschlösung gelöst und separat abgetrennt und gespeichert wird. Die CO₂-Wäsche-Technik ist bislang die einzige Abtrennungstechnik von CO₂ an Kraftwerken und Industrieanlagen. Ein solches Verfahren der Abtrennung von CO₂, die CO₂-Rauchgaswäsche, ist aus dem Stand der Technik bekannt (z.B. WO 2007/094675 A1). Ein Nachteil dieses Verfahrens ist, dass das umweltschädliche CO₂ nicht weiter verwertet, sondern lediglich abgetrennt wird.

Im erfindungsgemäßen Verfahren erfolgt die Gewinnung von Kaliumkarbonat durch Karbonisieren einer aus beim Kalibergbau anfallenden Haldenabwasser stammenden wässrigen Lösung von Kaliumhydroxid und Kaliumsalzen mittels Abgasen aus industriellen Großanlagen, bevorzugt aus Kalkbrennereien. Der Vorteil der Verwendung von in Kalköfen entstehenden Abgasen besteht darin, dass CO₂ Hauptbestandteil des Abgases ist und wenig Verunreinigungen vorliegen. Abgase von beispielsweise fossilen Brennkraftwerken sollten vor ihrer Wäsche in einem Absorber von Asche, Rußpartikel und schwefelhaltigen Gasen gereinigt werden.

Um die optimale Kohlendioxid-Löslichkeit in der erfindungsgemäßen eingesetzten Kalium-hältigen Waschlösung (stammend aus beim Kalibergbau anfallenden Haldenabwasser) zu gewährleisten, soll die Reaktionstemperatur beim Vorgang der Karbonatisierung, nach einer bevorzugten Ausführungsform des erfindungsgemäßen Verfahrens, 100°C nicht überschreiten. In einer bevorzugten Ausführungsform des erfindungsgemäßen Verfahrens wird die Reaktionstemperatur so gewählt, dass Magnesium- und Natriumkarbonate in ihrer Löslichkeit eingeschränkt sind. Vorzugsweise erfolgt die Reaktionstemperatur beim Karbonatisieren der Kalium-hältigen Waschlösung bei höchstens 100°C, vorzugsweise höchstens 90°C, besonders bevorzugt höchstens 80°C, ganz besonders bevorzugt höchstens 70°C, insbesondere höchstens 60°C.

Um einen optimalen Prozessablauf zu gewährleisten, wird in einer weiteren bevorzugten Ausführungsform der vorliegenden Erfindung die Reaktionstemperatur und Kohlendioxidzufuhr während des Karbonatisierens der Kalium-hältigen Waschlösung, vorzugsweise kontinuierlich, gemessen.

In einem weiteren bevorzugten Schritt des erfindungsgemäßen Verfahrens, wird das durch Karbonatisieren der Kalium-hältigen Waschlösung aus dem beim Kalibergbau anfallenden Haldenabwasser gewonnene Kaliumkarbonat abgetrennt oder durch einen Eindampfungsprozess konzentriert. Vorzugsweise wird das durch das vorliegende Verfahren gewonnene Kaliumkarbonat auf eine 10-60%ige, mehr bevorzugt 40-50%ige wässrige Kaliumkarbonatlösung konzentriert, auch hier kann wieder die bei der nötigen Abkühlung des Abgases vor seiner Wäsche gewonnene thermische Energie zum Einsatz kommen.

Nach einem weiteren besonderen Merkmal des erfindungsgemäßen Verfahrens wird das flüssige Kaliumkarbonat so lange einem Eindampfungsprozess ausgesetzt, bis die Karbonate der Kationen als feste Salze ausfallen.

In einer weiteren bevorzugten Ausführungsform der vorliegenden Erfindung findet das durch das erfindungsgemäße Verfahren hergestellte Kaliumkarbonat Verwendung als ökologisches Auftau- und Gefrierschutzmittel. In einer weiteren bevorzugten Ausführungsform wird das Kaliumkarbonat in flüssiger Form als Auftau- und Gefrierschutzmittel eingesetzt. In einer weiteren Ausführungsform kann das durch den Eindampfungsprozess entstandene feste Kaliumkarbonat auch als festes Streumittel eingesetzt werden.

Die in den beiliegenden bzw. der obenstehenden Beschreibung geoffenbarten einzelnen Ausführungsformen der vorliegenden Erfindung können beliebig miteinander kombiniert werden, jede Kombination der einzelnen Ausführungsformen wird hiermit ausdrücklich geoffenbart.

Das erfindungsgemäße Verfahren zur Herstellung von Kaliumkarbonat weist erhebliche Vorteile gegenüber den Verfahren gemäß dem Stand der Technik auf, so wird beispielsweise durch das erfindungsgemäße Verfahren die Entsorgungslogistik der beim Kalibergbau anfallenden Haldenabwässer begünstigt, und zum anderen wird die CO₂-Belastung im Verbrennungs- bzw. Abgas von Industrieanlagen verringert. Außerdem werden durch das vorliegende erfindungsgemäße Verfahren die Produktionskosten von Kaliumkarbonat gesenkt, was den künftigen Großeinsatz als Auftau- und Gefrierschutzmittel begünstigt. Dies insbesondere deswegen, als eine erfindungsgemäß anfallende, Kaliumcarbonat in einer Menge von über 35 %, vorzugsweise über 50 % enthaltene wässrige Lösung direkt als Auftau- und Gefrierschutzmittel verwendet werden kann.

Unter dem Begriff CO₂-haltiges Abgas, wie er in der vorliegenden Beschreibung und den Ansprüchen verwendet wird, wird vor allem das bei Verbrennungsprozessen entstehende Rauch-, Verbrennungs- oder Abgas verstanden, wie beispielsweise die Verbrennungsgase industrieller Großanlagen von fossilbefeuerten Kraftwerken, Hochöfen zur Produktion und Veredlung von Metallen, Erdgasaufbereitungsanlagen, Ammoniaksyntheseanlagen sowie Zementanlagen oder Kalkbrennereien, insbesondere von Kalkbrennereien.

Die vorliegende Erfindung wird anhand der folgenden Beispiele illustriert, auf welche sie selbstverständlich nicht eingeschränkt ist.

### Vergleichsbeispiel Herstellung von Kaliumkarbonat unter Verwendung von Kalilauge

Eine zweigeteilte Absorptionskolonne im technischen Maßstab wird von einem Rauchgas mit einem CO₂-Gehalt von 8 bis 13% von unten nach oben durchströmt. Die am Kopf aufgegebene Kalilauge besitzt eine Konzentration von 44 bis 48%. Die Kalilauge rieselt durch den oberen Durchströmungsteil der Kolonne bis in den unteren Umlaufteil, über welchen der Kolonnensumpf umgepumpt wird. Die Reaktionstemperatur beim Karbonatisieren der Kalilauge liegt zwischen 60 und 80°C, vorzugsweise 65 bis 75°C.

Die entstandene wässrige Lösung von Kaliumkarbonat wird standhöhengeregelt aus dem Sumpfumlauf abgezogen. Der Flüssigkeitsstrom des Sumpfumlaufes wird für die Messung der Dichte und des pH-Wertes auf 40°C thermostatisiert, um die Glaselektroden für die pH-Messung nicht zu beschädigen. Der SollpH-Wert einer 50%igen Kaliumkarbonatlösung liegt bei 40°C bei 13,36. Der Dichtebereich der fertigen Kaliumkarbonat-Lösung beträgt etwa 1520 bis 1600 g/cm³, je nach Temperatur.

Die Gesamtalkalität der eingesetzten Kaliummenge, gerechnet als KOH, schwankt mit dem Natronlaugeanteil in dieser Lauge. Zur Erreichung der gewünschten Kaliumkarbonat-Qualität ist es daher empfehlenswert die Datenfelder für den Kaliumkarbonatgehalt als Funktion von Dichte und pH-Wert in Abhängigkeit von der Temperatur für den Schwankungsbereich der Qualität der eingesetzten Kalilauge zu erstellen.

### Beispiel 1: Herstellung von Kaliumkarbonat unter Verwendung von beim Kalibergbau anfallenden Haldenabwasser

In die Anlage lt. Vergleichsbeispiel wird am Kopf eine Waschflüssigkeit aus 50 Vol.-% 25%ige Kalilauge und 50 Vol.-% Haldenabwasser (s.u.) aufgegeben. Die Reaktion erfolgt wie im Vergleichsbeispiel.

Das Haldenabwasser stammt von der K+S KALI GmbH in Kassel, DE. Die qualitative und quantitative Analyse zweier repräsentativer Proben dieses Haldenabwassers aus dem Kalibergbau ergab folgendes Ergebnis:

| | Probe I | Probe II |
|---|---|---|
| KCl, g/l | 35 | 35 |
| MgCl₂, g/l | 63 | 62 |
| MgSO₄, g/l | 81 | 80 |
| NaCl, g/l | 191 | 191 |
| CaSO₄, g/l | 0,5 | 0,5 |

Die spezifische Dichte beider Proben betrug 1,253 g/cm³ bei 18°C.

Bei einer Gesamtsalzmenge von etwa 370 g/l pro Liter Haldenabwasser sind das für die beiden Proben etwa 9 Gew.-% KCl, 17 Gew.-% MgCl₂, 22 Gew.-% MgSO₄, und etwa 52 Gew.-% NaCl, Rest CaSO₄. Grob gesagt enthalten Haldenabwässer aus dem Kalibergbau damit im allgemeinen zwischen 2 und 20 Gew.-% KCl, zwischen 1 und 30 Gew.-% MgCl₂, zwischen 10 und 40 Gew.-% MgSO₄, Rest NaCl und geringe Mengen (unter 1 Gew.-%) an CaSO₄.

Die nach der Rauchgaswäsche entstandene wässrige Lösung von Beispiel 1 wird abgezogen und zur Trockene eingedampft. Das erhaltene Produkt wird im nachfolgenden Auftauversuch eingesetzt.

### Beispiel 2: Auftauversuch

Bei diesem Versuch wurden Eisplatten zu je 0,25 m² Oberfläche mit handelsüblichen Kaliumcarbonat einerseits und dem getrockneten Produkt von Beispiel 1 andererseits bestreut. Die Auftragmenge betrug dabei 3,5 g pro Platte, was ungefähr der im Straßenverkehr üblichen Auftragmenge (10-12 g/m²) entspricht.

Nach jeweils 30 Minuten, 1 Stunde und nach 2 Stunden wurde das auf den jeweiligen Platten gebildete Auftauwasser abgegossen und gewogen. Nach Abschluss des Versuchs wurden die gesammelten Auftauwässer auf -18 °C abgekühlt und über Nacht bei dieser Temperatur gehalten.

| | 3,5 g Kaliumcarbonat pro 0,25 m² | 3,5 g Produkt von Bsp. 1 pro 0,25 m² |
|---|---|---|
| | gebildete Auftauflüssigkeit (g) | |
| Nach 30 Minuten | 123 | 116 |
| Nach 1 Stunde | 124 | 163 |
| Nach 2 Stunden | 186 | 207 |

Bei dem anschließenden Überfrierungsversuch zeigte sich, dass die gesammelten Auftauflüssigkeiten bei Verwendung von handelsüblichem Kaliumcarbonat über Nacht wieder eingefroren waren, die gesammelten Auftauflüssigkeiten bei Verwendung des Produkts von Beispiel 1 blieben jedoch über Nacht bei -18 °C flüssig.

## Patentansprüche

1. Verfahren zur Herstellung einer wässrigen Lösung von Kaliumkarbonat (K₂CO₃) durch Wäsche von Kohlendioxid-haltigen Abgasen, **dadurch gekennzeichnet, dass** bei der Gaswäsche eine wässrige Lösung umfassend aus dem Kalibergbau stammende Haldenabwässer, enthaltend Natrium, Kalium, Kaliumhydroxid, Magnesium, Chlorid und Sulfat in gelöster Form, verwendet wird.

2. Verfahren nach Anspruch 1, **dadurch gekennzeichnet, dass** das Kohlendioxid-haltige Abgas ein Verbrennungs- oder Abgas aus industriellen Großanlagen, wie fossilbefeuerte Kraftwerke, Hochöfen zur Produktion und Veredlung von Metallen, Erdgasaufbereitungsanlagen, Ammoniaksyntheseanlagen, Zementanlagen oder Kalkbrennereien, insbesondere aus Kalkbrennereien, ist.

3. Verfahren nach einem der Ansprüche 1 oder 2, **gekennzeichnet durch** die folgenden Schritte:
- Aufreinigen des gegebenenfalls konzentrierten Haldenabwassers; und
- Einsetzen des gegebenenfalls konzentrierten Haldenabwassers als Waschlösung bei der Gaswäsche.

4. Verfahren nach einem der Ansprüche 1 bis 3, **dadurch gekennzeichnet, dass** die Reaktionstemperatur beim Karbonatisieren der Kalilauge bzw. Kalium-hältigen Waschlösung bei höchstens 100°C, vorzugsweise höchstens 90°C, besonders bevorzugt höchstens 80°C, ganz besonders bevorzugt höchstens 70°C, insbesondere höchstens 60°C liegt.

5. Verfahren nach einem der Ansprüche 1 bis 4, **dadurch gekennzeichnet, dass** die wässrige Kaliumkarbonatlösung vor oder nach der Abtrennung durch Eindampfen konzentriert wird, vorzugsweise auf eine 10-60%ige, mehr bevorzugt auf eine 40-50%ige wässrige Kaliumkarbonatlösung.

6. Verwendung der nach einem der Ansprüche 1 bis 5 hergestellten wässrigen Kaliumkarbonatlösung als flüssiges Auftaumittel.

7. Verwendung der nach einem der Ansprüche 1 bis 5 hergestellten wässrigen Kaliumkarbonatlösung zur Gewinnung von Kaliumkarbonatgranulat.

8. Verwendung des Kaliumkarbonatgranulats nach Anspruch 7 als festes Streumittel.

## Claims

1. Method for producing an aqueous solution of potassium carbonate (K₂CO₃) by scrubbing carbon dioxide-containing exhaust gases, **characterized in that** during the gas scrubbing process, an aqueous solution comprising dump wastewater from potassium mining and containing sodium, potassium, potassium hydroxide, magnesium, chloride and sulphate in dissolved form is used.

2. Method according to claim 1, **characterized in that** the carbon dioxide-containing exhaust gas is a combustion or exhaust gas from industrial large-scale plants, such as fossil-fired power plants, blast furnaces for the production and refining of metals, natural gas processing plants, ammonia synthesis plants, cement plants or lime plants, in particular from lime plants.

3. Method according to either claim 1 or claim 2, **characterized by** the following steps:
- purifying the possibly concentrated dump wastewater; and
- using the possibly concentrated dump wastewater as a scrubbing solution for gas scrubbing.

4. Method according to any of claims 1 to 3, **characterized in that** the reaction temperature when carbonating the potassium lye or potassium-containing scrubbing solution is at most 100°C, preferably at most 90°C, particularly preferably at most 80°C, very particularly preferably at most 70°C, in particular at most 60°C.

5. Method according to any of claims 1 to 4, **characterized in that** the aqueous potassium carbonate solution is concentrated by means of evaporation before or after the separation, preferably to a 10-60%, more preferably to a 40-50% aqueous potassium carbonate solution.

6. Use of the aqueous potassium carbonate solution produced according to any of claims 1 to 5 as a liquid de-icing agent.

7. Use of the aqueous potassium carbonate solution produced according to any of claims 1 to 5 for the production of potassium carbonate granulate.

8. Use of the potassium carbonate granulate according to claim 7 as solid grit.

## Revendications

1. Procédé de préparation d'une solution aqueuse de carbonate de potassium (K₂CO₃) par lavage de gaz d'échappement contenant du dioxyde de carbone, **caractérisé en ce que**, lors du lavage des gaz, on utilise une solution aqueuse comprenant des effluents de terrils provenant de l'exploitation de la potasse, contenant du sodium, du potassium, de l'hydroxyde de potassium, du magnésium, du chlorure et du sulfate sous forme dissoute.

2. Procédé selon la revendication 1, **caractérisé en ce que** le gaz d'échappement contenant du dioxyde de carbone est un gaz de combustion ou un gaz d'échappement provenant de grandes installations industrielles, telles que les centrales électriques à combustibles fossiles, les hauts fourneaux pour la production et l'affinage de métaux, les installations de traitement du gaz naturel, les installations de synthèse de l'ammoniac, les cimenteries ou les fours à chaux, en particulier de fours à chaux.

3. Procédé selon l'une des revendications 1 et 2, **caractérisé par** les étapes suivantes :
- épuration des effluents de terrils, éventuellement concentrés ; et
- utilisation des effluents de terrils, éventuellement concentrés, comme solution de lavage lors du lavage des gaz.

4. Procédé selon l'une des revendications 1 à 3, **caractérisé en ce que** la température de réaction lors de la carbonatation de la potasse caustique ou de la solution de lavage contenant du potassium est d'au plus 100 °C, de préférence d'au plus 90 °C, plus préférablement d'au plus 80 °C, en particulier d'au plus 70 °C, tout particulièrement d'au plus 60 °C.

5. Procédé selon l'une des revendications 1 à 4, **caractérisé en ce que** la solution aqueuse de carbonate de potassium est concentrée par évaporation avant ou après la séparation, pour obtenir une solution aqueuse de carbonate de potassium de préférence à 10-60 %, plus préférablement à 40-50 %.

6. Utilisation de la solution aqueuse de carbonate de potassium préparée selon l'une des revendications 1 à 5 comme agent de dégivrage liquide.

7. Utilisation de la solution aqueuse de carbonate de potassium préparée selon l'une des revendications 1 à 5 pour l'obtention de granulés de carbonate de potassium.

8. Utilisation des granulés de carbonate de potassium selon la revendication 7 comme agent d'épandage solide.
